# EUROPÄISCHE PATENTANMELDUNG

(11) **EP 1 486 403 A2**
(43) Veröffentlichungstag der Anmeldung: **15.12.2004**
(21) Anmeldenummer: 04013311.8
(22) Anmeldetag: 05.06.2004
(51) Int. Cl.: B62D 25/18

(54) **Kotflügel für Fahrzeuge, insbesondere für die Hinterräder von Zugmaschinen mit Sattelaufliegern**

(30) Priorität: 14.06.2003 DE 10326873
(71) Anmelder: DaimlerChrysler AG, 70567 Stuttgart (DE)
(72) Erfinder: Bruss, Werner, 71540 Murrhardt (DE); Scharlapan, Ernst, 73773 Aichwald (DE)

(57) **Zusammenfassung**

Ein Kotflügel für Fahrzeuge, insbesondere für Hinterräder von Zugmaschinen mit Sattelaufliegern, soll bei einem möglichst geringen Abstand zwischen Aufliegerunterkante und Rad derart angebracht sein, dass in Extremfällen auftretende, über ein bestimmtes Maß hinausgehende Abstandsverringerungen gegenüber dem Rad einerseits und dem Auflieger andererseits nicht zu einer aufschlagbedingten Zerstörung des Kotflügels bzw. des an diesen anschlagende Radreifens führt.

Zu diesem Zweck können je nach unterschiedlichen Zugmaschinen-Aufliegerkonfiguarationen Kotflügel mit unterschiedlichen Zenithöhen aus gleichen Kotflügelteilen (2) hergestellt werden.

Darüber hinaus kann im Zenitbereich des Kotflügels ein Gleitlager in der Form eines Zwischenstückes (3) vorgesehen werden, wodurch mittels einer fahrbetriebszustandsabhängig arbeitenden Verstelleinrichtung (5) die Kotflügel-Zenithöhe für extreme Fahrbetriebszustände gegenüber dem Rad aufschlagsichernd verlagerbar ist.

## Beschreibung

Die Erfindung betrifft Kotflügel für Fahrzeuge, insbesondere für die Hinterräder von Zugmaschinen mit Sattelaufliegern.

Gattungsgemäße Kotflügel müssen grundsätzlich so montiert sein, dass die Räder bei Einfederungen nicht anschlagen und dass ferner auch genügend Freiraum zu dem Auflieger besteht, damit dieser bei fahrbedingten Schwenkbewegungen in Seiten- oder Längsrichtung nicht auf den zugeordneten Kotflügel aufschlägt. Um diese beiden Forderungen auch für mögliche, seltene Extremsituationen sicher erfüllen zu können, ist in Richtung der Fahrzeughochachse ein relativ großer Raumbedarf erforderlich, der dem Konstrukteur in der Regel nicht in ausreichendem Maße zugestanden wird. Die Praxis fordert vielmehr möglichst niedrige Bauhöhen. Zur Erfüllung dieser Forderung sind bereits Kotflügelanordnungen bekannt, die bei Normalbetrieb des Fahrzeuges ausreichenden Sicherheitsabstand gegenüber dem Rad einerseits und dem Auflieger andererseits aufweisen, jedoch für seltene Extremsituationen Notmaßnahmen gegen für die Sicherheit unakzeptable Funktionsstörungen vorsehen. Solche Notmaßnahmen bestehen beispielsweise darin, dass zumindest die Zenitbereiche solcher Kotflügel in irgendeiner Form nachgiebig gestaltet sind und zwar entweder durch dort vorgesehenes, elastisch verformbares Material oder durch eine elastisch höhenverschiebbare Lagerung.

Ein elastischer Zenitbereich bei schwenkbarer Lagerung der Kotflügelseitenbereiche ist beispielsweise bekannt aus DD 279 450 A1 sowie aus DE 695 00 750 T2, wobei bei der zuletzt genannten Ausführung keine schwenkbare Lagerung der Kotflügelseitenbereiche besteht.

Seitlich schwenkbar gelagerte Kotflügelzenit-Bereiche, die eine Höhenverlagerung dieser Bereiche erlauben, sind bekannt aus DE 37 11 307 A1 und DE 43 09 098 A1.

Darüber hinaus ist es bekannt, die Höhenlage eines gattungsgemäßen Kotflügels durch fahrbetriebsabhängige Stelleinrichtungen verändern zu können. Eine entsprechende Einrichtung ist aus DE 41 30 509 C2 bekannt.

Die Erfindung beschäftigt sich mit dem Problem, zum einen einen gattungsgemäßen Kotflügel zu schaffen, dessen Form, das heißt dessen Krümmung zur Festlegung der Zenithöhe, bei ortsfester Lagerung in den Seitenbereichen auf einfache und rationelle Weise verstellt werden kann. Darüber hinaus soll ein derart ausgebildeter Kotflügel bezüglich seiner Zenithöhe nicht nur voreinstellbar sein, sondern seine insbesondere in Extremsituationen betriebssichere Zenithöhe fahrbetriebsabhängig verändern können.

Der vorstehend zuerst genannte Aspekt wird durch die Ausbildung eines gattungsgemäßen Kotflügels nach den kennzeichnenden Merkmalen des Patentanspruchs 1 gelöst.

Der zweite Teilaspekt des erfindungsgemäßen Problems wird durch einen gattungsgemäßen Kotflügel mit den kennzeichnenden Merkmalen des Anspruchs 2 gelöst.

Zweckmäßige Ausgestaltungen der Lehre nach Anspruch 2 sind Gegenstand der Unteransprüche.

Bezüglich des ersten Teilaspekts des erfindungsgemäßen Problems beruht die Erfindung auf dem Gedanken, einen Kotflügel auf dessen Bogenumfang zweigeteilt auszuführen und über ein als eine Art Gleitlager dienendes Zwischenstück im Zenitbereich zu verbinden. Innerhalb des Zwischenstückes können die eingreifenden Teilstücke des Kotflügels derart in Bogenrichtung des Kotflügels verschoben werden, dass die Gesamtbogenlänge des Kotflügels zwischen seinen seitlichen Anlenkungen und damit gleichzeitig auch seine Zenithöhe als solches veränderbar ist. In den gewünschten Zenithöhen erfolgt jeweils eine Fixierung, wodurch jeweils praktisch Kotflügel unterschiedlicher, im Betrieb unveränderbarer Form geschaffen werden.

Bei dem zweiten Teilaspekt des erfindungsgemäßen Problems nimmt ein Kotflügel, der aus den Grundelementen des Kotflügels nach Anspruch 1 ausgebildet ist, in Extremsituationen, die zu einem funktionsstörenden Anschlagen des Rades an den Kotflügel führen könnten, eine gegenüber dem Rad abstandsvergrößernde Ausweichsposition zwangsläufig ein. Durch diese Maßnahme ist es möglich, den für den für einen sicheren Normalbetrieb notwendigen Kotflügel-Rad-Höhenabstand relativ gering zu wählen, da in fahrbedingten Extremsituationen eine Abstandsvergrößerung zwangsläufig herbeigeführt wird. Durch eine solche Rad-Kotflügel-abstandsvergrößernde Kotflügelverlagerung wird begrenzt auf die entsprechende Extremsituation der für einen Normalbetrieb zwischen Kotflügel und Auflieger vorgesehene Abstand kurzzeitig der Dauer der Extremsituation entsprechend verringert. Im Hinblick darauf, dass es äußerst unwahrscheinlich ist, dass eine Fahrsituation eintritt, bei der gleichzeitig eine von der Fahrzeugfederung einerseits bedingte Abstandsverkleinerung zwischen Kotflügel und Rad auftritt und andererseits auch eine Abstandsverringerung zwischen Auflieger und Kotflügel durch eine ungünstige Aufliegerneigung, stellt die erfindungsgemäße Lösung einen für die Praxis akzeptablen, ausreichend sicheren Notbehelf dar, um zwischen Auflieger und Rad einen möglichst geringen Abstand für eine maximale Fahrzeugnutzhöhe einstellen zu können.

Die Mittel, durch die die erfindungsgemäße, fahrbetriebsbedingte Höhenverstellung des Zenitbereiches des Kotflügels erreicht werden, können rein mechanischer Art sein. Hierbei kann ein Stößel zwischen dem Zenit des Kotflügels und der Radachse vorgesehen sein, der bei einer zu großen Einfederung des Rades durch die Radachse als Widerlager zusammen mit dem Zenitbereich des Kotflügels nach oben verlagert wird. Der Stößel ist hierzu fahrgestellseitig gelagert und zur Verlagerung des Kotflügelzenites in die Normalbetriebsstellung entsprechend federbelastet.

Möglich ist es selbstverständlich auch, den Einfederungsweg des Rades durch einen Sensor zu erfassen und das Sensorsignal an einen Stellmotor zur Verlagerung des Kotflügelzenites zu übertragen.

Besonders vorteilhafte Ausführungen der Erfindung sind in der Zeichnung dargestellt.

In dieser zeigen jeweils in schematischer Form:
- Fig. 1: einen zweigeteilten, im Zenit über ein Zwischenstück als Gleitlager verbundenen Kotflügel mit einer Zenithöhe im Fahrzeugnormalbetrieb,
- Fig. 2: den Kotflügel nach Fig. 1 mit einem nach oben verlagerten Zenitbereich,
- Fig. 3: eine vergleichsweise Gegenüberstellung der Kotflügellagen entsprechend den Betriebszuständen nach den Fig. 1 und 2,
- Fig. 4: einen Ausschnitt des Kotflügelzenites mit dem dort vorgesehenen Zwischenstück als Gleitlager,
- Fig. 5: den Zenitbereich eines Kotflügels in der Darstellung nach Fig. 4 mit einer festen Verbindung der in den Zenit ragenden Kotflügelteilabschnitte mit dem diese verbindenden - in diesem Fall keine Gleitlagerfunktion ausübenden - Zwischenstück.

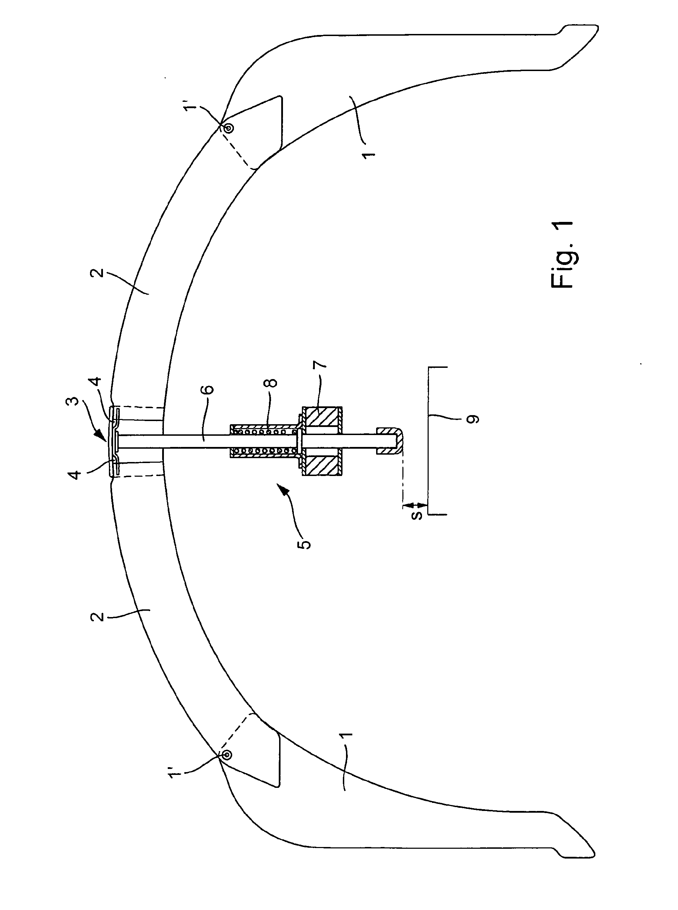

Ein in Fig. 1 in seinem Normalbetriebszustand, das heißt in seinem voreingestellten Betriebszustand dargestellter Kotflügel setzt sich aus an dem Fahrgestell eines Fahrzeuges fest angebundenen seitlichen Festbereichen 1 und einem oberen verlagerbaren Bereich zusammen. Der obere verlagerbare Bereich besteht aus zwei jeweils an den seitlichen Festbereichen 1 um eine Fahrzeugquerachse 1' schwenkbar gelagerten, oberen Kotflügelteilbereichen 2 und einem diese in dem Kotflügelzenit verbindenden Zwischenstück 3 zusammen.

Das Zwischenstück 3 besitzt die Funktion eines Gleitlagers für die in dieses seitlich eingreifenden Enden der beiden oberen Kotflügelteilbereiche 2.

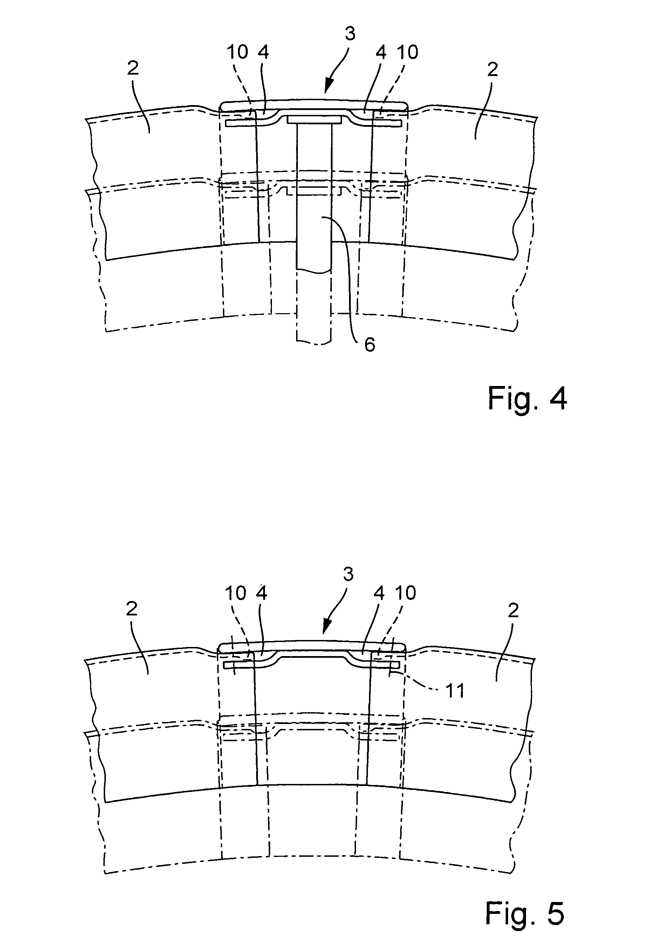

Der Aufbau des Zwischenstückes 3 für dessen Funktion als Gleitlager lässt sich am besten der vergrößerten Darstellung in Fig. 4 entnehmen. Dort sind eine oberste und eine unterste Zenitlage des Kotflügels dargestellt, wobei die durchgezogenen Linien die oberste und die strichpunktierten Linien die unterste Zenitlage wiedergeben.

Das Zwischenstück 3 besitzt an seinen beiden in Bogenrichtung des Kotflügels liegenden Seiten je eine Einschiebe-Nut 4. In diese beiden Nuten 4 greifen die miteinander zu verbindenden Enden der beiden oberen Kotflügelteilbereiche 2 verschiebefähig ein. Für eine einwandfreie Führung der Enden der oberen Kotflügelteilbereiche 2 sind deren Enden jeweils mit einem verdickten Führungssteg 10 versehen. Durch diesen Führungssteg 10 ist innerhalb der Nuten 4 trotz der Verlagerung der Enden der oberen Kotflügelteilbereiche 2 auf einem Kreisbogen innerhalb der Nuten 4 eine formschlüssige, verquetschungsfreie Führung möglich.

Zur Erzielung einer fahrbetriebsabhängigen Verlagerung der Zenithöhe des Kotflügels ist eine Verstelleinrichtung 5 vorgesehen. Diese umfasst einen fest mit dem Zwischenstück 3 verbundenen Stößel 6, der in einem fahrgestellseitigen Führungselement 7 höhenverschiebbar gelagert ist. Innerhalb des Führungselementes 7 ist der Stößel durch eine Feder 8 in Richtung auf eine untere Normalbetriebslage federbelastet.

Bei dem Betriebszustand nach Fig. 1 besitzt das freie Ende des Stößels 6 gegenüber einer angedeuteten Radachse 9 einen Abstand s.

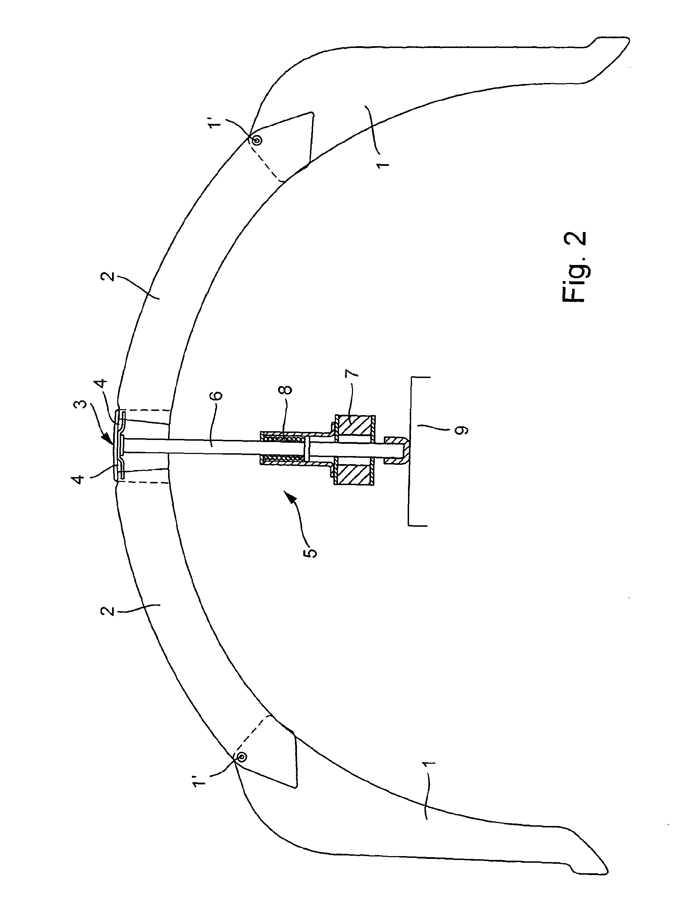

Bei der Darstellung nach Fig. 2 drückt die Radachse 9 den Stößel 6 für eine Abstandsvergrößerung zwischen dem Zenit des Kotflügels und dem nicht dargestellten Rad nach oben in eine gehobene Zenitposition.

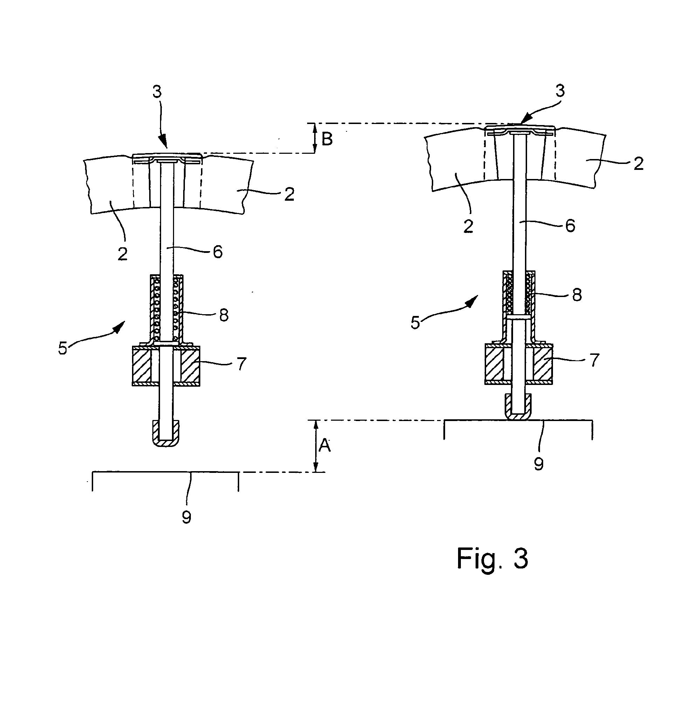

In Fig. 3 sind die Betriebszustände nach den Fig. 1 und 2 als Vergleich nebeneinander dargestellt. Während links ein Normalbetriebszustand dargestellt ist, zeigt der rechte Teil einen Betriebszustand nach Fig. 2, bei dem eine Verlagerung des Kotflügelzenitbereiches nach oben gegeben ist. Mit A ist der Hub der Achse zwischen den Betriebszuständen nach der linken und rechten Darstellung wiedergegeben. Der Abstand B kennzeichnet den Hub der Zenitverlagerung bei dem Kotflügel mit Bezug auf die verglichenen Betriebszustände.

Bei der Ausführung nach Fig. 5 sind die Enden der oberen Kotflügelteilbereiche bei unterschiedlich dargestellten Zenithöhen jeweils fest in dem Zwischenstück 3 verankert, beispielsweise verschraubt (in der Zeichnung angedeutet durch Verschraubungslinien 11). Die Darstellung mit durchgezogenen und strichpunktierten Linien entspricht den Kotflügelbogenformen nach Fig. 4. Der Vorteil der Ausführung nach Fig. 5 besteht darin, dass Kotflügel mit in der Zenithöhe unterschiedlich ausgebildeten oberen Bereichen aus gleichen Kotflügelteilbereichen 2 herstellbar sind. Hierdurch können Werkzeugkosten gespart werden, die erforderlich wären, wenn für jede unterschiedliche Zenitform unterschiedliche obere Kotflügelbereiche 2 hergestellt werden müssten.

## Patentansprüche

1. Kotflügel für Fahrzeuge, insbesondere für die Hinterräder von Zugmaschinen mit Sattelaufliegern,
**gekennzeichnet durch** die
**Merkmale**
- ein vorderer und hinterer, jeweils um eine Fahrzeugquerachse (1') schwenkbarer oberer Kotflügelteilbereich (2) eines bogenförmigen Kotflügels greifen in ein die freien Enden der beiden Kotflügelteilbereiche (2) verbindendes Zwischenstück (3) ein,
- die Bereiche des Zwischenstückes (3), in die die oberen Kotflügelteilbereiche (2) eingreifen, sind als Nuten (4) ausgebildet,
- die Nuten (4) besitzen in Umfangsrichtung des bogenförmigen Kotflügels eine Verschiebetiefe für die in die jeweilige Nut (4) eingreifenden oberen Kotflügelteilbereiche (2),
- die Nuten (4) sind mit Spannmitteln zum Arretieren der eingreifenden oberen Kotflügelteilbereiche (2) in beliebig gewünschten Einschiebe-Tiefen versehen.

2. Kotflügel für Fahrzeuge, insbesondere für die Hinterräder von Zugmaschinen mit Sattelaufliegern,
**gekennzeichnet durch** die
**Merkmale**
- ein vorderer und hinterer, jeweils um eine Fahrzeugquerachse (1') schwenkbarer oberer Kotflügelteilbereich (2) eines bogenförmigen Kotflügels greifen in ein die freien Enden der beiden Kotflügelteilbereiche (2) verbindendes Zwischenstück (3) ein,
- die Bereiche des Zwischenstückes (3), in die die oberen Kotflügelteilbereiche (2) eingreifen, sind als Nuten (4) ausgebildet,
- die Nuten (4) besitzen in Umfangsrichtung des bogenförmigen Kotflügels eine Verschiebetiefe für die in die jeweilige Nut (4) eingreifenden oberen Kotflügelteilbereiche (2),
- die oberen, in die Nut (4) eingreifenden Kotflügelteilbereiche (2) sind dort gleitfähig gelagert,
- das Zwischenstück (3) ist in Abhängigkeit seines Abstandes zu dem von ihm bedeckten Rad zwangsverstellbar gelagert.

3. Kotflügel nach Anspruch 2,
**dadurch gekennzeichnet,**
**dass** die Mittel zur Zwangsverlagerung des Zwischenstückes (3) umfassen,
- einen mit dem Zwischenstück (3) verbundenen Stößel (6),
- eine Lagerung des Stößels (6) in einem fahrzeugfesten Führungselement (7),
- eine Federbeaufschlagung des Stößels (6) in Richtung einer vorgebbaren Lage des Zwischenstückes (3),
- eine Zuordnung des von dem Zwischenstück (3) abgewandten Endes des Stößels (6) zur Achse des Rades derart, dass der Stößel (6) bei einer Verringerung des Rad-Zwischenstück-Abstandes über ein vorgegebenes Maß hinaus von einem Widerlager der Radachse nach oben verschoben wird.

4. Kotflügel nach Anspruch 2,
**dadurch gekennzeichnet,**
**dass** ein Abstandssensor zur Erfassung jeweils des betriebsaktuellen Zwischenstück-Rad-Abstandes vorgesehen ist, nach dessen Messwerten ein durch den Sensor gesteuerter Stellmotor die Zwangsverstellung vornimmt.

5. Kotflügel nach einem der vorhergehenden Ansprüche,
**dadurch gekennzeichnet,**
**dass** der in jeweils eine der beiden Nuten (4) des Zwischenstückes (3) eingreifende Abschnitt des oberen Kotflügelteilbereiches (2) an seiner vorderen Kante einen den angrenzenden Kotflügelbereich dickenmäßig übersteigenden Führungssteg (10) aufweist.
